(19) Europäisches Patentamt / European Patent Office / Office européen des brevets

(11) **EP 2 608 240 B1**

(12) **EUROPEAN PATENT SPECIFICATION**

(45) Date of publication and mention
of the grant of the patent:
**28.01.2015 Bulletin 2015/05**

(51) Int Cl.:
*H01H 33/70* *(2006.01)*    *H01H 1/36* *(2006.01)*
*H01H 33/02* *(2006.01)*    *H01H 33/14* *(2006.01)*
*H01H 33/18* *(2006.01)*

(21) Application number: **12195692.4**

(22) Date of filing: **05.12.2012**

(54) **Arc extinguishing apparatus for ring main unit**

Bogenauslöschvorrichtung für Ringhaupteinheit

Appareil d'extinction d'arc pour unité principale annulaire

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2011 KR 20110138575**

(43) Date of publication of application:
**26.06.2013 Bulletin 2013/26**

(73) Proprietor: **LSIS Co., Ltd.
Dongan-gu, Anyang-si
Gyeonggi-do 431-848 (KR)**

(72) Inventor: **Park, Woo Jin
Cheongju-si,
Chungcheongbuk-do (KR)**

(74) Representative: **Tholén, Johan
Awapatent AB
Box 1066
251 10 Helsingborg (SE)**

(56) References cited:
**EP-A1- 0 874 380    US-A- 4 803 319**

EP 2 608 240 B1

**Description**

BACKGROUND OF THE INVENTION

1. Field of the Invention

The present disclosure relates to a ring main unit (so called abbreviated as RMU), and particularly, to an arc extinguishing apparatus for a ring main unit.

2. Background of the Invention

A multi-circuit switchgear so called as the ring main unit is the electric power device for using to branch the electric power from an electric power line (that is an electric power cable) laid under the ground and distribute it to an electric consumer such as a building on the ground or to divide the electric power.

The ring main unit includes an outer case charged with an arc-extinguishing gas for extinguishing an arc therein, incoming power lines for Alternating Current(abbreviated as AC hereinafter) 3 phases (in other words 3 poles) led into the outer case from the underground electric power line, outgoing power lines for a plurality of branch lines connected from the outer case to a plurality of electric loads (or consumers), and a switch mechanism for electrically switching to a connecting position that connects the incoming power lines with the outgoing power line for a branch line, earthing position for earthing (or grounding) the power lines or separation position that separates the incoming power lines from the outgoing power line .

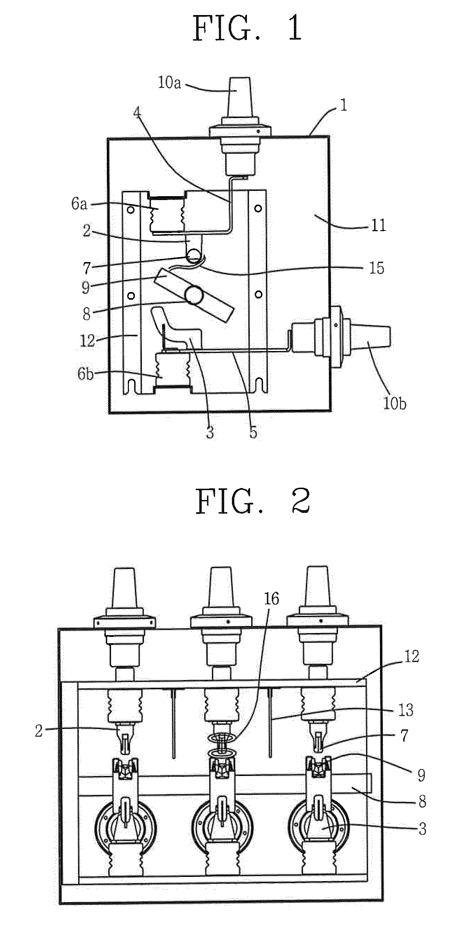

An example of the ring main unit according to the related art will be described with reference to FIGS. 1 to 7.

First, a configuration of an arc-extinguishing apparatus of the ring main unit according to an example of the related art will be described.

The disclosed related art cites the disclosure of U.S. Patent Registration No. 4,803,319, and a more detailed configuration and operation may be referred to the publication of U.S. Patent Registration No. 4,803,319.

The ring main unit according to an embodiment of the related art is configured to include an outer case 1, a first bushing 10a, a second bushing 10b, a first fixed contact 2, a permanent magnet 7, a second fixed contact 3, a first bus bar 4, a second bus bar 5, an upper insulator 6a, a lower insulator 6b, a rotational shaft 8, a movable contact 9, a support frame 12, and an insulating gas 11.

In FIG. 1, reference numeral 15 denotes an arc generated between contacts when the movable contact 9 is separated from the first fixed contact 2 and the second fixed contact 3 while an electric current flows, and reference numeral 16 denotes a magnetic field generated in the vicinity of the permanent magnet 7 by the permanent magnet 7.

In FIG. 2, reference numeral 13 denotes an insulating partition wall for electrically insulating electric power circuit for each phase in order to prevent short circuit between phases.

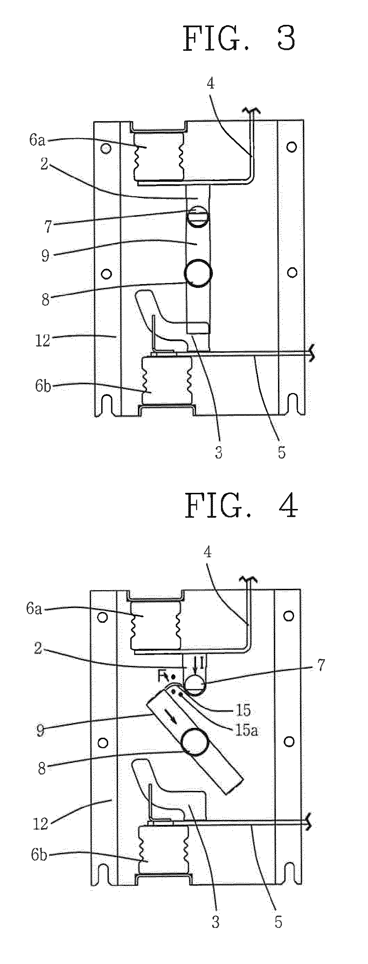

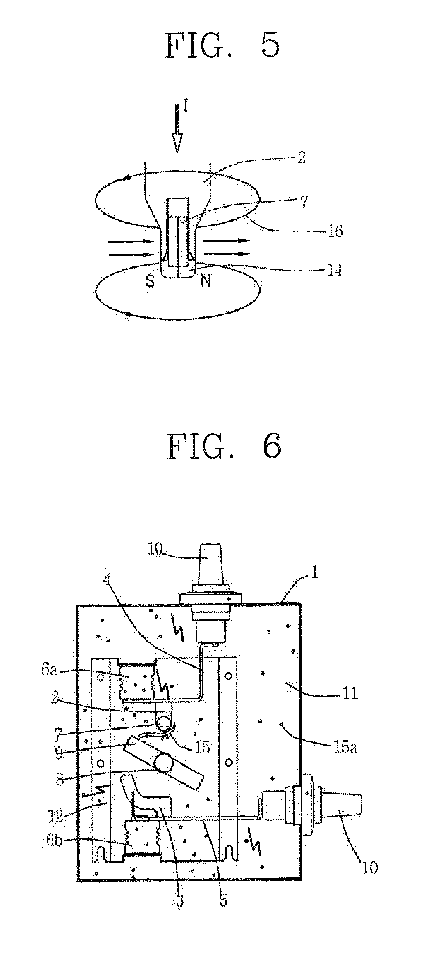

Also, reference numeral 15a in FIGS. 4 and 6 designates a high temperature and high pressure arc vapor moving as ambient air is heated by the arc 15.

The outer case 1 determines an external appearance of the ring main unit and is provided as a means for accommodating or supporting the configuring components of the ring main unit. As shown in FIGS. 1 and 2, the outer case 1 is made of a metal whose vertical section is a rectangular shape or a circular shape.

The first bushing 10a is a terminal unit fixedly installed on an upper portion of the outer case 1. The first bushing 10a has an electrical conductor member therein and is formed by molding an electrical insulating material on the outside thereof such that incoming power lines of respective AC phases such as an R phase, an S phase, and a T phase led into the outer case 1 from the underground power line. As shown in FIG. 2, three first bushings 10a may be provided to correspond to the three AC phases, respectively.

The second bushing 10b is a terminal member fixedly installed on a lower portion of the outer case 1, to which outgoing power lines for a plurality of branch lines connected from the outer case 1 to the electric loads (or consumers) are connected. Like the first bushing 10a, the second bushing 10b includes an electric conductor member therein and is formed by molding an electric insulating material on the outside thereof. Three second bushings 10b may be provided to correspond to three AC phases in each of the branch circuit.

The first fixed contact 2 is a fixed contact portion electrically connected to the first bushing 10a through the first bus bar 4 and is configured by an electric conductor blade.

As shown in FIG. 5, the permanent magnet 7 is inserted into an end portion open to both sides, that is, into an accommodation recess portion formed in both end portions of the first fixed contact 2 and supported therein, and a cover 14 may be installed to prevent the permanent magnet 7 from being released downwardly.

As shown in FIG. 2, three first fixed contacts 2 may be provided to correspond to the three AC phases, respectively.

The permanent magnet 7 is a means fixedly installed in the end portion of the first fixed contact 2 and for applying a magnet field 16 to extinguish the arc 15.

The second fixed contact 3 is an electric load side fixed contact portion electrically connected to the second bushing 10b through the second bus bar 5, and is configured by an electrical conductor blade. As shown in FIG. 2, three second fixed contacts 3 may be provided to correspond to three AC phases, respectively.

The first bus bar 4 is an electrical conductor that electrically connects the first fixed contact 2 to the first bushing 10a. For example, the first bus bar 4 may be made of a copper material and configured as a thin wide bar.

The second bus bar 5 is an electrical conductor that electrically connects the second fixed contact 3 to the second bushing 10b. For example, the second bus bar 5 may be made of a copper material and configured as a thin wide bar.

The upper insulator 6a is an insulating support member made of an electrically insulating material and supporting the first bus bar 4 such that it is electrically insulated from the support frame 12.

The lower insulator 6b is an electrically insulating support member made of an electrically insulating material and supporting the second bus bar 5 such that it is electrically insulated from the support frame 12.

The movable contact 9 is configured by an electrical conductor and supported to be rotatable by the rotational shaft 8. The movable contact 9 is a rotatable unit that is rotatable to a circuit closing position (or an ON position) in which the movable contact 9 is in contact with the first fixed contact 2 and the second fixed contact 3 to switch the 3-phases electric power circuit between the electric power source side and the electric load side of each branch circuit into a closed circuit state, or to a circuit opening position (or an OFF position) in which the movable contact 9 is separated from the first fixed contact 2 and the second fixed contact 3 to switch the 3-phases electric power circuit into an open circuit state.

As shown in FIG. 2, the three movable contacts 9 are commonly supported by the rotational shaft 8 so as to be rotated, and thee movable contacts 9 may be provided to correspond to the 3-phases electric power circuits.

The rotational shaft 8 is a driving unit for supporting and driving the movable contact 9 to the circuit opening position or the circuit closing position. The rotational shaft 8 is connected to an electric motor (not shown) or a manual driving source (not shown) and rotated in a clockwise direction or counterclockwise direction.

The support frame 12, which is a means for supporting the upper insulator 6a, the lower insulator 6b, and the rotational shaft 8, is fixedly installed in the outer case 1.

The operation of the ring main unit according to an example of the related art configured as described above will be described with reference to FIGS. 1 to 7.

First, an operation from the circuit opening position (OFF position) as can be seen in FIGS. 1 to 4 to the circuit closing position as can be seen in FIG. 3 will be described.

When the rotational shaft 8 is rotated by an electric motor (not shown) or a manual driving source (not shown) in the clockwise direction, the movable contact 9 goes into a position in which it is in contact with the first fixed contact 2 and the second fixed contact 3 according to driving of the rotational shaft 8.

Thus, an underground power line for the electric power source side electrically connected to the first fixed contact 2 through the first bus bar 4, the first bushing 10a, and an incoming power line for each phase (not shown) is electrically connected to the electric load side power line of a branch circuit electrically connected through the movable contact 9, the second fixed contact 3, the second bus bar 5, the second bushing 10b, and an outgoing electric power line for each phase (not shown), and thus, electric power may be supplied from the underground power line to the branch circuit.

Next, an operation from the circuit closing position (or an ON position) as can be seen in FIG. 3 to the circuit closing position (or an OFF position) as can be seen in FIGS. 1 to 4 will be described.

When the rotational shaft 8 is rotated by an electric motor (not shown) or a manual driving source (not shown) in the counterclockwise direction, the movable contact 9 goes into a position in which it is separated from the first fixed contact 2 and the second fixed contact 3 according to driving of the rotational shaft 8.

Thus, the underground power line for the electrical power source side electrically connected to the first fixed contact 2 through the first bus bar 4, the first pushing 10a, and an incoming power line of each phase (not shown) is electrically separated from the electric power line of the electric load side of the branch circuit electrically connected through the movable contact 9, the second fixed contact 3, the second bus bar 5, the second bushing 10b, and an outgoing power line for each phase (not shown), and the electric power supply to the branch circuit from the underground power line is interrupted.

In the case of the interrupting operation, the arc 15 occurs between the first fixed contact 2 and the movable contact 9, and the high temperature and high pressure arc vapor 15a is generated in the vicinity of the arc 15. At this time, as can be seen in FIGS. 4 and 5, electromagnetic force F as shown in FIG. 4 is generated by a current I and the magnetic field 16 according to Fleming's left hand rule. Such electromagnetic force F acts to push the arc 15 between the first fixed contact 2 and the movable contact 9, so the arc 15 between the first fixed contact 2 and the movable contact 9 is pushed out to become extinct.

However, as the circuit closing operation or the circuit opening operation is frequently performed, the high temperature and high pressure arc vapor 15a is attached to the first fixed contact 2 and the upper insulator 6a to contaminate and damage the first fixed contact 2 and the upper insulator 6a and cause insulation breakdown between the first bar 4 and the support frame 12. Also, as the density of the high temperature and high pressure arc vapor 15a in the insulating gas 11 is increased, insulation performance of the insulating gas 11 and electrical insulation properties between the outer case 1 and the insulating gas 11 are degraded, and in the case of circuit opening operation, electrical insulation properties between the first fixed contact 2 and the second fixed contact 3 and insulation properties among the R, S, and T phases are degraded.

## SUMMARY OF THE INVENTION

Therefore, an aspect of the detailed description is to provide an arc extinguishing apparatus for a ring main unit capable of quickly extinguishing an arc by resolving shortage of arc extinguishing performance based on only magnetic force as in the related art by an accelerating and blowing effect of an insulating gas, thereby improving arc extinguishing performance.

To achieve these and other advantages and in accordance with the purpose of this specification, as embodied and broadly described herein, an arc extinguishing apparatus for a ring main unit, includes: a housing in which an insulating gas is charged; a plurality of fixed contactor assemblies for a power circuit fixed to be protruded toward the center in the housing and formed by inserting a permanent magnet for arc extinguishing by a magnetic force between a pair of main circuit fixed contacts; a plurality of earthing fixed contactors fixed to be protruded toward the center in the housing and installed to be spaced apart from the fixed contactor assemblies for a power circuit at a predetermined angle; a 3-phase common rotational shaft installed to be rotatable at the center of the housing; and a rotatable movable contactor assembly formed to extend from the rotational shaft, having a plurality of puffer guide plate sections having openings with a narrow opening width to accelerate the velocity of flow of insulating gas to extinguish arc by blowing it, and rotatable to a circuit closing position in which the rotatable movable contactor assembly is in contact with a main circuit fixed contact of the fixed contactor assembly for a power circuit, an earthing position in which the rotatable movable contactor assembly is in contact with the earthing fixed contactor, and a circuit opening position in which the rotatable movable contactor assembly is separated from the main circuit fixed contact and separated from the earthing fixed contactor, according to a rotation or the rotational shaft.

According to an aspect of the present invention, the movable contactor assembly may include a movable contactor provided to extend in a diameter direction from the rotational shaft, having a plurality of movable contacts installed to be in contact with the main circuit fixed contacts or the earthing fixed contactors interposed therebetween and spaced apart from one another in a facing manner, and provided to correspond to the three phases.

According to another aspect of the present invention, the movable contactor assembly further may include a pair of insulating partition wall portions facing each other by phases and spaced apart by a predetermined first distance in order to electrically insulate the movable contactor while allowing the earthing fixed contactor to pass therethrough.

The puffer guide plate section allowing the fixed contactor assembly for a power circuit to enter when the movable contactor assembly operates to a circuit closing position may have an opening with a width narrower than the first distance of the insulating partition wall portion in order to accelerate the velocity of flow of the insulating gas.

According to still another aspect of the present invention, each of the fixed contactor assemblies for a power circuit may include an insulating cover having a width larger than that of the main circuit fixed contact and made of an electrical insulating material, and the puffer guide plate section allowing the fixed contactor assembly for a power circuit to enter when the movable contactor assembly operates to a circuit closing position may have an opening having a width which is large at an end portion thereof to allow the insulating cover to pass therethrough and becomes narrower toward the rotational shaft to allow the main circuit fixed contact to pass therethrough.

According to still another aspect of the present invention, the insulating cover may include a cutaway portion formed to be trimmed slantingly to have a width reduced toward the permanent magnet, so as to freely pass through the opening of the puffer guide plate section when the movable contactor assembly operates to the circuit closing position or the circuit opening position.

According to still another aspect of the present invention, the puffer guide plate section may further include: a nozzle section formed to be bent at a right angle from the corner of the opening of the puffer guide plate section to accelerate an inflow speed or an outflow speed of the insulating gas.

According to still another aspect of the present invention, the rotational shaft may be divided into three rotational shaft sections so as to be separated or assembled to correspond to three phases.

According to still another aspect of the present invention, each of the rotational shaft sections may include a plurality of recess and protrusion portions formed to be protruded and depressed on both end portions thereof in a diameter direction, in order to allow the movable contactor assemblies of three phases to be easily separated or assembled.

According to still another aspect of the present invention, the movable contactor assemblies of three phases and the rotational shaft sections may be configured as a single assembly.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

## BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:

FIG. 1 is a side sectional view taken in a vertical direction to illustrate a configuration of a ring main unit according to an example of the related art;

FIG. 2 is a front sectional view taken in the vertical direction of the ring main unit according to an example of the related art;

FIG. 3 is a view illustrating an operational state of a major part of the ring main unit in a circuit closing position according to an example of the related art;

FIG. 4 is a view illustrating an operational state of the major part of the ring main unit at an initial stage of a circuit opening position according to an example of the related art;

FIG. 5 is a partially enlarged view illustrating a configuration of an end portion of a first fixed contact of the ring main unit and a magnetic field formed in the surroundings thereof according to an example of the related art;

FIG. 6 is a side sectional view taken in the vertical direction illustrating an arc and a insulation breakdown phenomenon due to a generation of arc vapor at a circuit opening completion position in the ring main unit according to an example of the related art;

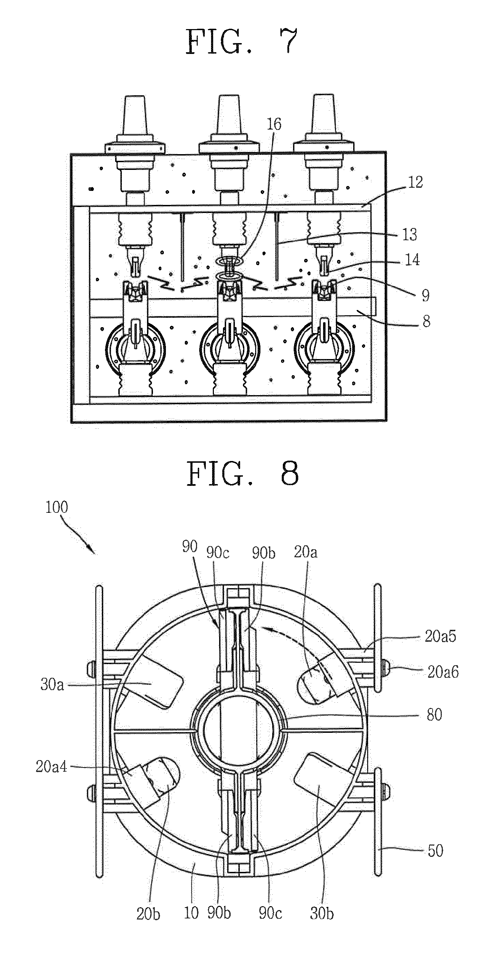

FIG. 7 is a front sectional view taken in the vertical direction illustrating an arc and a insulation breakdown phenomenon due to a generation of arc vapor at the circuit opening completion position in the ring main unit according to an example of the related art;

FIG. 8 is a front view illustrating an operational state at a circuit opening position in a configuration of a major part of a ring main unit having an arc extinguishing apparatus according to a preferred embodiment of the present invention;

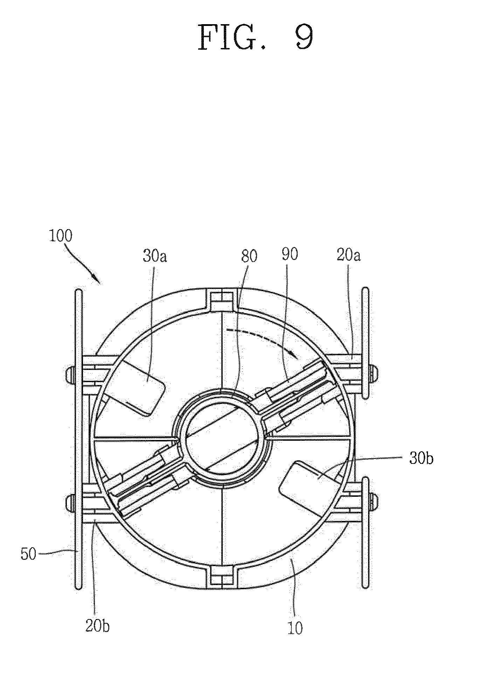

FIG. 9 is a front view illustrating an operational state at a circuit closing position in a configuration of a major part of a ring main unit having an arc extinguishing apparatus according to a preferred embodiment of the present invention;

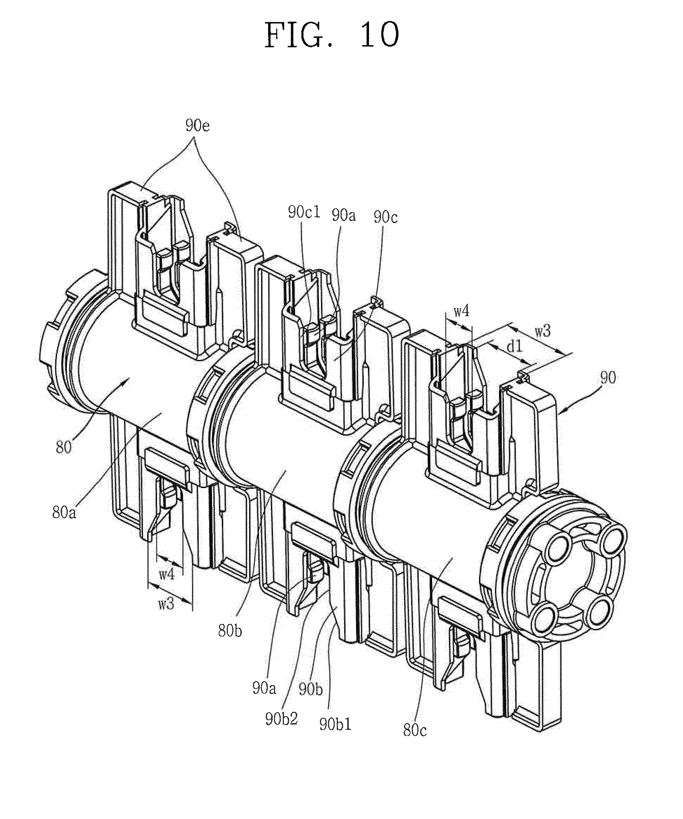

FIG 10 is a perspective view illustrating a configuration of a movable contactor assembly and a rotational shaft of a 3-phases arc extinguishing apparatus of the ring main unit according to a preferred embodiment of the present invention;

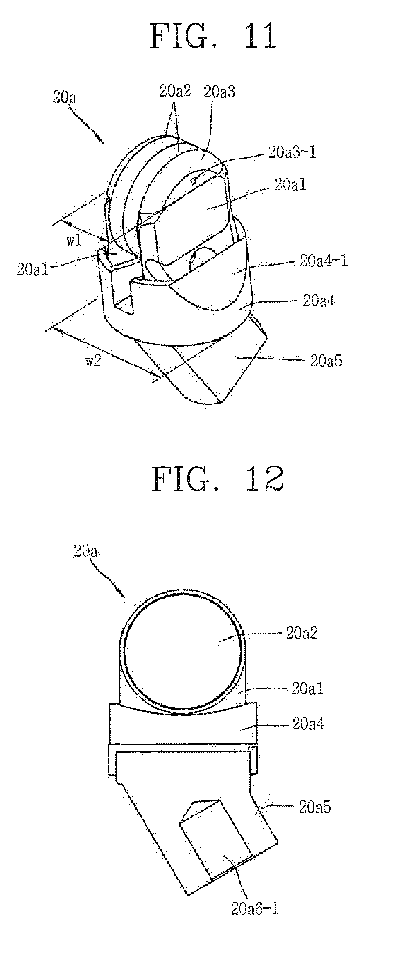

FIG. 11 is a perspective view of a fixed contactor assembly of the arc extinguishing apparatus of the ring main unit according to a preferred embodiment of the present invention;

FIG. 12 is a vertical sectional view of the fixed contactor assembly of FIG. 11.

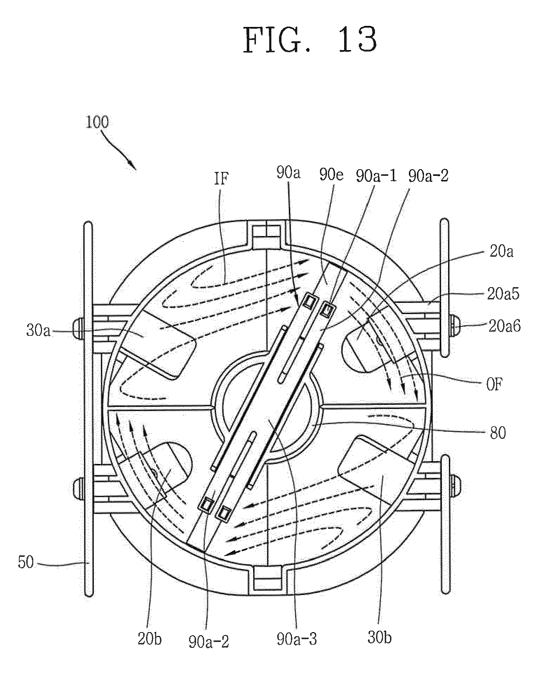

FIG. 13 is a vertical sectional view of the arc extinguishing apparatus of the ring main unit in which a blowing phenomenon occurs when an insulating gas flows in and flows out according to a preferred embodiment of the present invention;

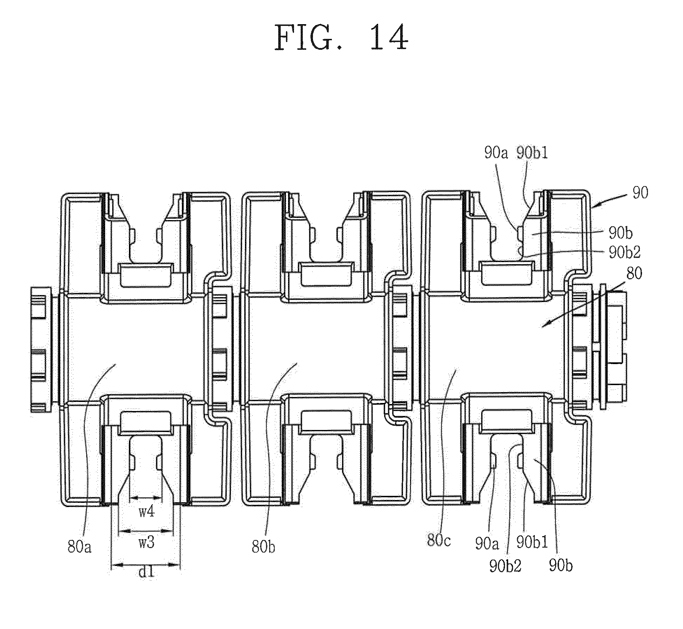

FIG. 14 is a front view illustrating a configuration of a 3-phases movable contactor assembly and the rotational shaft in the 3-phases arc extinguishing apparatus of the ring main unit according to another preferred embodiment of the present invention; and

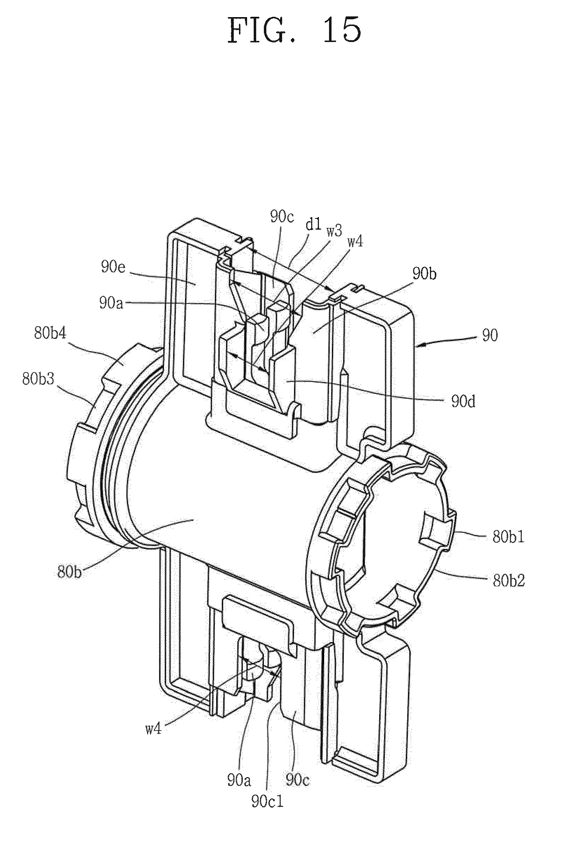

FIG. 15 is a perspective view illustrating a configuration of movable contactor assembly and the rotational shaft for one-phase in the arc extinguishing apparatus of the ring main unit according to another preferred embodiment of the present invention.

## DETAILED DESCRIPTION OF THE INVENTION

Description will now be given in detail of the exemplary embodiments, with reference to the accompanying drawings. For the sake of brief description with reference to the drawings, the same or equivalent components will be provided with the same reference numbers, and description thereof will not be repeated.

The foregoing objects and a configuration and an operational effect of the present invention will become more apparent from the following detailed description of the configuration and operation of an arc extinguishing apparatus for a ring main unit according to preferred embodiments of the present invention when taken in conjunction with FIGS. 8 to 15.

As can be seen in FIGS. 8 and 9, an arc extinguishing apparatus 100 for a ring main unit according to a preferred embodiment of the present invention includes a housing 10, a plurality of contactor assemblies 20a and 20b for an electric power circuit(abbreviated as circuit hereinafter), a plurality of earthing fixed contactors 30a and 30b, a rotational shaft 80, and a movable contactor assembly 90.

The housing 10 is a means for accommodating and supporting constituent components of the arc extinguishing apparatus 100. Preferably, the housing 10 may be formed by molding an artificial resin material having electrical insulation properties and may have a tubular shape as in the illustrated embodiment or may be variously modified to have a shape of a square pillar such that that a section thereof has a quadrangular shape.

In the ring main unit having the arc extinguishing apparatus 100 according to an embodiment of the present invention, an outer case, such as the outer case 1 illustrated in FIGS. 1 and 2, is provided to the exterior of the housing 10, and an insulating gas may be charged between the housing 10 and the outer case.

The plurality of fixed contactor assemblies 20a and 20b for the circuit are fixed to be protruded toward a center of the housing 10 in the housing 10. Among the plurality of fixed contactor assemblies 20a and 20b for the circuit, the upper fixed contactor assembly 20a may be electrically connected to an electric power source side of the circuit, and the lower fixed contactor assembly 20b may be electrically connected to an electric load side of the circuit.

The upper fixed contactor assembly 20a and the lower fixed contactor assembly 20b may be formed to have the same configuration, and according to a preferred embodiment, a permanent magnet (See 20a2 in FIG. 11) may be installed in the upper fixed contactor assembly 20a. Three upper fixed contactor assemblies 20a and three lower fixed contactor assemblies 20b may be provided to correspond to three AC phases of R, S, and T.

A detailed configuration of the fixed contactor assembly 20a will be described with reference to FIGS. 11 to 13 representatively showing the detailed configuration of the fixed contactor as a perspective view and a sectional view, respectively.

As can be seen, the upper fixed contactor assembly 20a may include a pair of main circuit fixed contacts 20a1, permanent magnets 20a2, magnet covers 20a3, an insulating cover 20a4, an extending conductor 20a5, and a connection screw 20a6.

As can be seen in FIGS. 11 and 12, the pair of main circuit fixed contacts 20a1 are configured as electrical conductor blades installed to be spaced apart from one another in order to allow the permanent magnets 20a2 for arc extinguishing to be installed therebetween. The pair of main circuit fixed contacts 20a1 may be electrically connected to an electric power source side of the circuit.

The permanent magnet 20a2 are configured as a pair of disk shaped permanent magnets and inserted to be installed between the pair of main circuit fixed contacts 20a1 for arc extinguishing. Like the permanent magnet 7 of the related art illustrated in FIGS. 4 and 5 as described above, the permanent magnets 20a2 act to push out the arc to an outer side by magnetic force.

The magnet covers 20a3 are configured as a pair and fixedly installed in end portions of the pair of main circuit fixed contacts 20a1 in order to support end portions of the permanent magnet 20a2 from both sides. Also, pin holes 20a3-1 are formed to pass through both of the magnet covers 20a3, and a pin (not shown) is inserted to pass through the upper portions of the permanent magnets 20a2 through the corresponding pin holes 20a3-1 to support the end portions of the permanent magnet 20a2 such that they are prevented from leaving.

The insulating cover 20a4 is made of an electrical insulating material, and has a recess portion allowing base portions of the pair of main circuit fixed contacts 20a1 to be inserted and supported therein. The base portions of the pair of main circuit fixed contacts 20a1 are inserted to be supported in the recess portion, and the insulating cover 20a4 shields to protect an area of the housing 10 against arc on which the pair of main circuit fixed contacts 20a1 is installed.

Also, as can be seen from FIG. 11, a width w2 of the insulating cover 20a4 is wider than a width w1 of the pair of main circuit fixed contacts 20a1.

Also, as can be seen from FIG. 11, the insulating cover 20a4 includes a cutaway portion 20a4-1 formed to be trimmed slantingly to have a width reduced toward the permanent magnets 20a2, so as to freely pass through an opening of a puffer guide plate section 90b as described hereinafter when the movable contactor assembly 90 operates to a circuit closing position or a circuit opening position.

The extending conductor 20a5 is an electrical conductor unit extending from the pair of main circuit fixed contacts 20a1 to the outside of the housing 10. The extending conductor 20a5 is mechanically and electrically connected to a bus bar 50 as an external conductive path formed by an electrical conductor of FIGS. 8 and 9. Here, the bus bar 50 is a means for providing a conduction path by the three phases R, S, and T common to the arc extinguishing apparatus 100 of each of a plurality of branch circuits, and thus, three bus bars may be configured. The bus bar 50 may be installed to extend generally in a horizontal direction in an accommodation space between the housing 10 and the outer case as described above.

As can be seen from FIG. 13 or 12, the connection screw 20a6 is a means for mechanically or electrically connecting the bus bar 50 and the extending conductor 20a5. A leg portion of the connection screw 20a6 is inserted into a connection screw hole 20a6-1 in FIG. 12 through the bus bar 50.

As can be seen from FIGS. 8 and 9, the plurality of earthing fixed contactors 30a and 30b are configured as electrical conductor blades fixed to be protruded toward the center in the housing 10, and are installed to be spaced apart at a predetermined angle from the fixed contactor assemblies 20a and 20b.

As can be seen from FIGS. 8 and 9, the rotational shaft 80 common to three phases is rotatably installed at the center of the housing 10. According to a preferred aspect of the present invention, the rotational shaft is configured as a shaft formed by molding an artificial resin material having electrical insulating properties.

As can be seen from FIG. 15, 10 or 14, according to a preferred embodiment of the present invention, the rotational shaft 80 is divided into three rotational shaft sections 80a, 80b, and 80c that may be separated or assembled to correspond to the three AC phases of R, S, and T.

Also, as can be seen from FIG. 15 representatively showing a configuration of the middle S-phase rotational shaft section 80b among the three rotational shaft sections 80a, 80b, and 80c, each of the rotational shaft sections 80a, 80b, and 80c has a plurality of protrusion and recess assembling portions formed to be protruded and concave in a diameter direction at both end portions thereof, such that the 3-phases movable contactor assemblies can be easily separated or assembled. Here, the protrusion and recess assembling portion includes first protrusion and recess portions 80b1 and 80b2 formed at a right end portion and second protrusion and recess portions 80b3 and 80b4 formed at a left end portion.

Assembling of the rotational shaft sections 80a, 80b, and 80c may be performed by inserting the second protrusion and recess portions 80b3 and 80b4 to an outer side of the first protrusion and recess assembling portions 80b1 and 80b2 between rotational shaft sections of adjacent phase. Namely, the rotational shaft sections 80a, 80b, and 80c are assembled such that protruded portions of the second protrusion and recess assembling portions 80b3 and 80b4 are positioned in an outer side of protruded portions of the first protrusion and recess assembling portions 80b1 and 80b2, and depressed portions of the second protrusion and recess assembling portions 80b3 and 80b4 are positioned in an outer side of depressed portions of the first protrusion and recess assembling portions 80b1 and 80b2.

As can be seen from FIGS. 8 to 10 and FIGS. 13 to 15, the movable contactor assembly 90 includes a plurality of movable contactors 90a and a plurality of puffer guide plate sections.

The plurality of movable contactors 90a are formed to extend in a diameter direction from the rotational shaft 80, and provided to correspond to three AC phases of R, S, and T.

In detail, as can be seen from FIG. 13, the movable contactor 90a for each phase is configured as an electrical conductor having two pairs of extending portions 90a-2 formed to pass through the rotational shaft 80 and extend to be symmetrical at both sides in a diameter direction and an intermediate common body portion 90a-3. One movable contact 90a-1 is installed in each extending portion 90a-2, and the two pairs of extending portions 90a-2 at each side in the diameter direction from the rotational shaft 80 and the movable contacts 90a-1 installed on the corresponding extending portions 90a-2 are provided to be spaced apart in a facing manner such that the main circuit fixed contact 20a1 of the fixed contactor assemblies 20a and 20b or the earthing fixed contactors 30a and 30b are interposed to be in contact therebetween. FIG. 13 is a vertical sectional view showing only a single movable contactor 90a for a phase, in which only a pair among two pairs of extending portions 90a-2 and movable contacts 90a-1 at each side is shown respectively.

Also, as can be seen from FIG. 13, the movable contactor 90a may be rotatable to a circuit closing position (in other words an ON position) in which the movable contactor 90a is in contact with the main circuit fixed contact 20a1 of the fixed contactor assemblies 20a and 20b for a power circuit, an earthing position (in other words a ground position) in which the movable contactor 90a is in contact with the earthing fixed contactors 30a and 30b, and a circuit opening position in which the movable contactor 90a is separated from the main circuit fixed contact 20a1 and separated from the earthing fixed contactors 30a and 30b, according to a rotation or the rotational shaft 80.

As can be seen from FIG. 10, 14, or 15, the movable contactor assembly 90 further includes an insulating partition wall portion 90e. Here, the insulating partition wall portion 90e is provided to insulate the movable contactors 90a from one another which are basically provided correspondingly for each phase. Also, in order to allow the fixed contactor assemblies 20a and 20b or the earthing fixed contactors 30a and 30b to pass therethrough, a pair of insulating partition wall portion 90e are provided to face each other by phases and spaced apart by a predetermined first distance d1.

As can be seen from FIG. 10, 14, or 15, the plurality of puffer guide plate sections include a plurality of first puffer guide plate sections 90b and a plurality of second puffer guide plate sections 90c.

The plurality of first puffer guide plate sections 90b and the plurality of second puffer guide plate sections 90c are formed to extend from the rotational shaft 80 and have an opening portions having a narrow opening width, namely, a sloped opening portion 90b1, and a first straight line opening portion 90b2 or a second straight line opening portion 90c1 in order to accelerate the velocity of flow of the insulating gas IF to extinguish an arc by blowing it.

In particular, in order to allow the insulating cover 20a4 having a width w2 greater than a width w1 of the pair of main circuit fixed contacts 20a1 of the fixed contactor assemblies 20a and 20b to pass therethrough, the first puffer guide plate section 90b includes the sloped opening portion 90b1 having a width w3 at an end portion thereof wider than the width w2 of the insulating cover 20a4 and having the width narrowed toward the rotational shaft 80 to allow the main circuit fixed contact 20a1 to pass therethrough, and the first straight line opening portion 90b2 formed to extend linearly toward the rotational shaft 80 from the sloped opening portion 90b1. Here, a width w4 of the first straight line opening portion 90b2 is greater than the width w1 of the main circuit fixed contact 20a1.

Also, the plurality of second puffer guide plate section 90c has the second straight line opening portion 90c1 having the width w4 narrower than the first distance d1 of the insulating partition wall portion 90a to accelerate the velocity of flow of the insulating gas (IF in FIG. 13). Here, since the width w4 of the second straight line opening portion 90c1 is narrower than the width w2 of the insulating cover 20a4 of the fixed contactor assemblies 20a and 20b, the insulating cover 20a4 cannot pass through the second straight line opening portion 90c1 and the insulating gas (IF in FIG. 13) only is accelerated while passing through the second straight line opening portion 90c1.

Comparison of the sizes of the widths may be expressed by Equation (1) shown below.

$$w1 < w4 < w2 < w3 < d1 \ \text{------}(1)$$

Here, w1 is the width of the main circuit fixed contact 20a1, w4 is the width of the second straight line opening portion 90c1 of the second puffer guide plate section 90c, w2 is the width of the insulating cover 20a4 of the fixed contactor assemblies 20a and 20b, w3 is the width of an end portion having an opening with the widest opening width in the first puffer guide plate section 90b, and d1 is the first distance as a distance between the pair of insulating partition wall portion 903.

Thus, when the movable contactor assembly 90 operates to the circuit closing position, only the plurality of first puffer guide plate sections 90b may allow the fixed contactor assemblies 20a and 20b to enter. Namely, when the rotational shaft 80 is rotated in a clockwise direction from the circuit opening position (an OFF position) illustrated in FIG. 8, the fixed contactor assemblies 20a and 20b enter the sloped opening portion 90b1 and the first straight line opening portion 90b2 of the first puffer guide plate section 90b, thus allowing for the entering of the fixed contactor assemblies 20a and 20b. In FIG. 8, the direction of the arrow in the dotted line indicates a rotational direction of the movable contactor assembly 90 operating to the circuit opening position (the OFF position).

Although not shown, a width of the earthing fixed contactors 30a and 30b may be equal to the width w1 of the main circuit fixed contact 20a1 according to a preferred embodiment of the present invention. Thus, as the rotational shaft 80 is rotated in a counterclockwise direction as shown in Fig.7, the earthing fixed contactors 30a and 30b pass through the second straight line opening portion 90c1 of the second puffer guide plate section 90c to be in the earthing position in which they are in contact with the movable contact (See 90a-1 in FIG. 13), and as the rotational shaft 80 is rotated in the clockwise direction from the earthing position, the earthing fixed contactors 30a and 30b may be in the circuit opening position as shown in Fig. 8 in which the movable contact (See 90a-1 in FIG. 13) is separated from the earthing fixed contactors 30a and 30b.

As can be seen from FIG. 15, according to a preferred embodiment of the present invention, the pair of first puffer guide plate sections 90b may further include a nozzle section 90d extending upon being bent from the corner of the opening portion of each of the first puffer guide plate section 90b to accelerate an inflow speed or an outflow speed of the insulating gas.

According to an embodiment illustrated in FIG. 8 or 15, the first puffer guide plate section 90b may be installed in one side of an upper portion of the movable contactor assembly 90, the second puffer guide plate section 90c may be installed in the other side of the upper portion of the movable contactor assembly 90, the second puffer guide plate section 90c may be installed in one side of a lower portion of the movable contactor assembly 90, and the first puffer guide plate section 90b may be installed in the other side of the lower portion of the movable contactor assembly 90. The purpose of the configuration in which the first puffer guide plate sections 90b and the second puffer guide plate sections 90c are alternately installed in one side and the other side of the upper and lower portions of the movable contactor assembly 90 is because the first puffer guide plate section 90b having the sloped opening portion 90b1 with the opening width w3 greater than the width w2 of the insulating cover 20a4 among the fixed contactor assemblies 20a and 20b is required only in one side in which the fixed contactor assemblies 20a and 20b enter and exit.

However, in order to simplify the configuration of the movable contactor assembly 90, all the puffer guide plate sections in one side and the other side of the upper and lower portions of the movable contactor assembly 90 may be configured as the first puffer guide plate sections 90b as illustrated in FIG. 14.

According to a preferred embodiment of the present invention, the movable contactor assembly 90 including the movable contactor 90a, the first puffer guide plate section 90b, the second puffer guide plate section 90c, the nozzle section 90d, and the insulating partition wall portion 90e, and the rotational shaft sections 80a, 80b, and 80c may be configured as a single assembly for each phase as illustrated in FIG. 15, and may be integrally formed through molding.

According to the configuration of the assembly of the movable contactor assembly 90 for each phase and the rotational shaft 80, fabrication productivity can be enhanced in fabricating the arc extinguishing apparatus of the ring main unit, and even when a defect or a fault is discovered during fabrication or after being installed in a service location, the corresponding assembly may be replaced to thus obtain effects that the defect can be easily coped with and maintenance is simplified.

Meanwhile, an operation of the arc extinguishing apparatus for a main ring unit according to a preferred embodiment of the present invention configured as described above will be described with reference to FIGS. 8 to 15 and mainly with reference to FIG. 13.

First, an operation from the circuit opening position (in other words the OFF position as illustrated in FIG. 8) to the circuit closing position (in other words the ON position) as illustrated in FIG. 9 in the arc extinguishing apparatus of the ring main unit according to a preferred embodiment of the present invention will be described.

When the rotational shaft 80 is rotated by an electric motor (not shown) or a manual driving source (not shown) in a clockwise direction, the movable contactor assembly 90 is in a position in which it is in contact with the fixed contactor assemblies 20a and 20b according to the driving of the rotational shaft 80. Namely, the main circuit fixed contact 20a1 of the fixed contactor assemblies 20a and 20b is inserted to be in contact between the two pairs of movable contacts 90a-1 installed to be spaced apart from one another in a facing manner in the movable contactor assembly 90.

Thus, an underground electric power line of the electric power source side electrically connected to the fixed contactor assemblies 20a and 20b through the bus bar 50 and incoming electric power lines by phases (not shown) are electrically connected to the electric power line of the electric load side of a branch circuit electrically connected through the movable contact 90a-1, the fixed contactor assemblies 20a and 20b, the bus bar 50, and outgoing electric power lines by phases (not shown), so the electric power may be supplied to the branch circuit from the underground electric power line.

Next, an operation from the circuit closing position (in other words the ON position) as illustrated in FIG. 9 to the circuit opening position (in other words the OFF position) as illustrated in FIG. 8 in the arc extinguishing apparatus of the ring main unit according to a preferred embodiment of the present invention will be described.

When the rotational shaft 80 is rotated by power from a driving source such as an opening spring (not shown) or a permanent magnetic actuator (not shown) in a counterclockwise direction, the movable contactor assembly 90 is in a position in which it is separated from the fixed contactor assemblies 20a and 20b according to the driving of the rotational shaft 80. Namely, the two pairs of movable contacts 90a-1 installed to be spaced apart from one another in a facing manner in the movable contactor assembly 90 are separated from the main circuit fixed contact 20a1 of the fixed contactor assemblies 20a and 20b.

At this time, in the case of the operation in the circuit opening position, an arc occurs between the main circuit fixed contact 20a1 and the movable contact 90a-1 and electromagnetic force generated by the permanent magnet 20a2 of the fixed contactor assemblies 20a and 20b acts to push out the arc between the main circuit fixed contact 20a1 and the movable contact 90a-1. Also, according to a preferred embodiment of the present invention, the velocity of flow of the insulating gas IF introduced to the openings having the narrow opening width of the plurality of first puffer guide plate sections 90b and the plurality of second puffer guide plate sections 90c, namely, the sloped opening portion 90b1 and the first straight line opening portion 90b2 or the second straight line opening portion 90c1 can be accelerated by the corresponding openings, and thus, as illustrated in FIG. 13, the arc can be blown to be extinguished by the outflow insulating gas having a fast speed. Thus, since the arc is extinguished by blowing the insulating gas by the velocity of flow accelerated through the narrow openings of the plurality of first puffer guide plate sections 90b and the plurality of second puffer guide plate sections 90c in addition to the pushing out the arc with the electromagnetic force by the permanent magnet 20a2 of the fixed contactor assemblies 20a and 20b, the arc extinguishing performance can be considerably enhanced in comparison to the related art.

Thus, according to the separation of the movable contact 9a-1 and the fixed contactor assemblies 20a and 20b, the underground electric power line electrically connected to the fixed contactor assemblies 20a and 20b through the bus bar 50 and the incoming electric power lines by phases (not shown) is electrically separated from the electric power line of the electric load side to the branch circuit electrically connected through the bus bar 50 and the outgoing electric power lines by phases (not shown), so the electric power supply to the branch circuit from the underground electric power line is cut off.

Next, an operation from the circuit closing position (or the ON position) as illustrated in FIG. 9 to an earthing position (not shown) in the arc extinguishing apparatus of the ring main unit according to a preferred embodiment of the present invention will be described.

When the rotational shaft 80 is rotated by an electric motor (not shown) or a manual driving source (not shown) in a counterclockwise direction, the movable contactor assembly 90 is in a position by driving of the rotational shaft 80 in which it is in contact with the earthing fixed contactors 30a. Namely, the earthing fixed contacts 30a and 30b are inserted to be in contact between the two pairs of movable contacts 90a-1 installed to be spaced apart from one another in a facing manner in the movable contactor assembly 90.

Thus, the bus bar 50 and the electric load side are earthed.

Since the arc extinguishing apparatus of the ring main unit according to an embodiment of the present invention includes the plurality of puffer guide plate sections having openings with a narrow opening width to accelerate the velocity of flow of the insulating gas to extinguish an arc by blowing it, an arc can be extinguished by blowing it as the insulating gas is accelerated such that the outflow speed is faster than the inflow speed by the corresponding puffer guide plate sections. Therefore, the arc extinguishing performance can be considerably improved in comparison to the related art having the configuration of the arc extinguishing apparatus based only on magnetic force.

In the arc extinguishing apparatus for a ring main unit according to an embodiment of the present invention, since the movable contactors are provided to have a plurality of movable contacts installed to be in contact with the main circuit fixed contacts or the earthing fixed contactors interposed therebetween and spaced apart from each other in a facing manner and disposed to correspond to the three phases, the 3-phases circuits may be opened or closed or earthed according to a rotation position of the rotational shaft .

In the arc extinguishing apparatus for a ring main unit according to an embodiment of the present invention, the movable contactors provided to correspond to the three phases further include the insulating partition wall portions provided to face each other by phases and spaced apart from each other by the predetermined first distance to support the movable contacts while allowing the fixed contactor assemblies or the earthing fixed contactors to pass therethrough, and the puffer guide plate sections allowing the fixed contactor assemblies to enter when the movable contactor assemblies operate to the circuit closing position have the openings with a width narrower than the first distance of the insulating partition wall portions to accelerate the velocity of flow of the insulating gas. Thus, electrical insulation among the 3-phases movable contactors is secured by the insulating partition wall portions, the movable contactors can be supported while allowing the fixed contactor assemblies or the earthing fixed contactors to pass therethrough, and the blow effect that an arc is blown to be extinguished by the insulating gas since the velocity of flow of the insulating gas is accelerated by the opening portions can be obtained.

In the arc extinguishing apparatus for a ring main unit according to an embodiment of the present invention, the fixed contactor assemblies include the insulating cover made of an electrical insulator and having a width greater than that of the main circuit fixed contact, and when the movable contactor assemblies operate to the circuit closing position, the puffer guide plate sections facing the fixed contactor assemblies have the opening portions configured to have a large width at an end portion thereof to allow the insulating cover to pass therethrough and have a width narrowed toward the rotational shaft to allow the main circuit fixed contact to pass therethrough. Thus, since the insulating cover having a large width and the main circuit fixed contact having a narrower width can pass through the opening portions, the contact opening and closing operation can be smoothly performed and the housing area on which the insulating cover is installed can be shielded from an arc so as to be protected.

In the arc extinguishing apparatus for a ring main unit according to an embodiment of the present invention, since the insulating cover includes the cutaway portion formed to be trimmed slantingly such that a width thereof is narrowed toward the permanent magnet, when the movable contactor assemblies operate to the circuit closing position or the circuit opening position, the insulating cover can freely pass through the opening portions of the puffer guide plate sections.

In the arc extinguishing apparatus for a ring main unit according to an embodiment of the present invention, since the puffer guide plate section further includes the nozzle section bent at a right angle from the corner of the opening and extended, a narrow flow passage is formed by the nozzle section, and thus, the speed of the insulating gas flowing in or out while passing through the nozzle section can be accelerated.

In the arc extinguishing apparatus for a ring main unit according to an embodiment of the present invention, the puffer guide plate section is provided in at least one side of the inlet or outlet of the insulating gas in the movable contactor assemblies. Thus, when the puffer guide plate section is provided in the inlet, ambient insulating gas is accelerated to flow in, and when the puffer guide plate section is provided in the outlet, the speed of the insulating gas can be accelerated when flowing out.

In the arc extinguishing apparatus for a ring main unit according to an embodiment of the present invention, the puffer guide plate section is provided in any one of the upper portion and the lower portion of the movable contactor assemblies. Thus, when the puffer guide plate section is provided in the upper portion of the movable contactor assembly, an arc generated between the movable contactors corresponding to the main circuit fixed contact connected to the electric power source side of the circuit can be promptly extinguished, and when puffer guide plate section is provided in the lower portion of the movable contactor assembly, an arc generated between the movable contactors corresponding to the main circuit fixed contact connected to the electric load side of the circuit can be promptly extinguished.

In the arc extinguishing apparatus for a ring main unit according to an embodiment of the present invention, since the rotational shaft is divided into three rotational shaft sections so as to be separated or assembled to correspond to the three phases, fabrication productivity can be enhanced.

In the arc extinguishing apparatus for a ring main unit according to an embodiment of the present invention, since the respective rotational shaft sections have the plurality of recess and protrusion portions formed to be protruded or concaved in a diameter direction at both end portions thereof, the movable contactor assemblies by phases can be easily separated or assembled, enhancing fabrication productivity.

In the arc extinguishing apparatus for a ring main unit according to an embodiment of the present invention, since the movable contactor assembly for each phase and the rotational shaft section are configured as a single assembly, fabrication productivity can be enhance in fabricating the arc extinguishing apparatus of the ring main unit, and even when a defect or a fault is discovered during the fabrication or after being installed in a service location, the corresponding assembly can be easily replaced, thus easily coping with the defect and simplifying maintenance.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims.

## Claims

1. An arc extinguishing apparatus for a ring main unit, comprising:

   a housing(10) in which an insulating gas is charged;
   a plurality of fixed contactor assemblies(20a, 20b) for an electric power circuit fixed to be protruded toward a center in the housing and formed by inserting a permanent magnet(20a2) for arc extinguishing by a magnetic force between a pair of main circuit fixed contacts(20a1);
   a rotational shaft(80), which is common to three phases, installed to be rotatable at the center of the housing; and
   a rotatable movable contactor assembly(90) formed to extend from the rotational shaft,
   **characterised by** a plurality of earthing fixed contactors(30a, 30b) fixed to be protruded toward the center in the housing and installed to be spaced apart from the fixed contactor assemblies at a predetermined angle; said rotatable movable contactor assembly having a plurality of puffer guide plate sections(90b, 90c) having opening portions(90b1, 90b2, 90c1) with a narrow opening width to accelerate the velocity of flow of insulating gas to extinguish arc by blowing it, and rotatable to a circuit closing position in which the rotatable movable contactor assembly is in contact with the main circuit fixed contacts of the fixed contactor assembly, an earthing position in which the rotatable movable contactor assembly is in contact with the earthing fixed contactor, and a circuit opening position in which the rotatable movable contactor assembly is separated from the main circuit fixed contact and separated from the earthing fixed contactor, according to a rotation or the rotational shaft.

2. The apparatus according to claim 1, wherein the movable contactor assembly comprises a movable contactor(90a) provided to extend in a diameter direction from the rotational shaft, having a plurality of movable contacts(90a-1) installed to be in contact with the main circuit fixed contacts or the earthing fixed contactors interposed therebetween and spaced apart from one another in a facing manner, and provided to correspond to the three phases.

3. The apparatus according to claim 1 or claim 2, wherein the movable contactor assembly further comprises a pair of insulating partition wall portions(90e) facing each other, each provided for each phase and spaced apart by a predetermined first distance in order to electrically insulate the movable contactor while allowing the fixed contactor assemblies or the earthing fixed contactors to pass therethrough, and
   the puffer guide plate section allowing the fixed contactor assembly to enter when the movable contactor assembly operates to a circuit closing position has an opening portion(90c1) with a width narrower than the first distance of the insulating partition wall portions in order to accelerate the velocity of flow of the insulating gas.

4. The apparatus according to any one of claims 1-3, wherein each of the fixed contactor assemblies comprises an insulating cover having a width larger than that of the main circuit fixed contact and made of an electrical insulating material, and
   the puffer guide plate section allowing the fixed contactor assembly for a power circuit to enter when the movable contactor assembly operates to a circuit closing position has an opening portion having a width which is large at an end portion thereof to allow the insulating cover to pass therethrough and becomes narrower toward the rotational shaft to allow the main circuit fixed contact to pass therethrough.

5. The apparatus according to any one of claims 1-4, wherein the insulating cover comprises a cutaway portion formed to be trimmed slantingly to have a width reduced toward the permanent magnet, so as to freely pass through the opening portion of the puffer guide plate section when the movable contactor assembly operates to the circuit closing position or the circuit opening position.

6. The apparatus according to anv one of claims 1-5, wherein each puffer guide plate section further comprises a nozzle section formed to be bent at a right angle and extend from the corner of the opening portion of the puffer guide plate section to accelerate an inflow speed or an outflow speed of the insulating gas.

7. The apparatus according to any one of claims 1-6, wherein the rotational shaft is divided into three rotational shaft sections so as to be separated or assembled to correspond to three phases.

8. The apparatus according to any one of claims 1-7, wherein each of the rotational shaft sections comprises a plurality of recess and protrusion portions formed to be protruded and concave on both end portions thereof in a diameter direction, in order to allow the movable contactor assemblies of three phases to be easily separated or assembled.

9. The apparatus according to any one of claims 1-8, wherein each of the movable contactor assemblies for each phase and each of the rotational shaft section are configured as a single assembly.

**Patentansprüche**

1. Lichtbogenlöschvorrichtung für eine Ringnetzstation, umfassend:

ein Gehäuse (10), in dem ein Isoliergas beaufschlagt ist;

mehrere feststehende Schützbaugruppen (20a, 20b) für einen elektrischen Starkstromkreis, die derart befestigt sind, dass sie zu einer Mitte im Gehäuse vorstehen, und die durch das Einführen eines Dauermagneten (20a2) für eine Lichtbogenlöschung durch eine Magnetkraft zwischen einem Paar von feststehenden Hauptstromkreiskontakten (20a1) gebildet sind;

eine drehende Welle (80), die für drei Phasen gemeinsam ist und derart angebracht ist, dass sie in der Mitte des Gehäuses drehbar ist; und

eine drehbare bewegliche Schützbaugruppe (90), die derart gebildet ist, dass sie sich von der drehenden Welle erstreckt, und die durch mehrere feststehende Erdungsschütze (30a, 30b) gekennzeichnet ist, die derart befestigt sind, dass sie zur Mitte im Gehäuse vorstehen, und derart angebracht sind, dass sie von den feststehenden Schützbaugruppen in einem vorgegebenen Winkel beabstandet sind; wobei die drehbare bewegliche Schützbaugruppe mehrere Pufferleitblechabschnitte (90b, 90c) aufweist, die Öffnungsabschnitte (90b1, 90b2, 90c1) mit einer engen Öffnungsweite aufweisen, um die Fließgeschwindigkeit des Isoliergases zu beschleunigen und den Lichtbogen durch Blasen zu löschen, und die zu einer Stromkreisschließstellung drehbar sind, in der die drehbare bewegliche Schützbaugruppe in Kontakt mit den feststehenden Hauptstromkreiskontakten der feststehenden Schützbaugruppe ist, eine Erdungsstellung, in der die drehbare bewegliche Schützbaugruppe in Kontakt mit dem feststehenden Erdungsschütz ist, und eine Stromkreisöffnungsstellung, in der die drehbare bewegliche Schützbaugruppe vom feststehenden Hauptstromkreiskontakt getrennt und vom feststehenden Erdungsschütz getrennt ist, gemäß einer Drehbewegung oder der sich drehenden Welle.

2. Vorrichtung nach Anspruch 1, wobei die bewegliche Schützbaugruppe einen beweglichen Schütz (90a) umfasst, der derart bereitgestellt ist, dass er sich in einer Durchmesserrichtung von der drehenden Welle erstreckt, und der mehrere bewegliche Kontakte (90a-1) aufweist, die derart angebracht sind, dass sie in Kontakt mit den feststehenden Hauptstromkreiskontakten oder den Erdungsschützen sind, die dazwischen eingeschoben sind, und die voneinander in einer gegenüberstehenden Weise beabstandet und derart bereitgestellt sind, dass sie den drei Phasen entsprechen.

3. Vorrichtung nach Anspruch 1 oder Anspruch 2, wobei die bewegliche Schützbaugruppe weiter ein Paar isolierende Trennwandabschnitte (90e) umfasst, die einander gegenüberstehen, wobei jedes jeweils für jede Phase bereitgestellt und durch einen vorgegebenen ersten Abstand beabstandet ist, um den beweglichen Schütz elektrisch zu isolieren, während den feststehenden Schützbaugruppen oder den feststehenden Erdungsschützen erlaubt wird, sich dort hindurchzubewegen, und

wobei der Pufferleitblechabschnitt der feststehenden Schützbaugruppe erlaubt, einzutreten, wenn die bewegliche Schützbaugruppe zu einer Stromkreisschließstellung betätigt wird, die einen Öffnungsabschnitt (90c1) mit einer Breite aufweist, die enger ist als der erste Abstand der isolierenden Trennwandabschnitte, um die Fließgeschwindigkeit des Isoliergases zu beschleunigen.

4. Vorrichtung nach irgendeinem der Ansprüche 1-3, wobei jede der feststehenden Schützbaugruppen eine Isolierabdeckung umfasst, die eine Breite aufweist, die größer ist als die vom feststehenden Hauptstromkreiskontakt und die aus einem Elektroisolierstoff hergestellt ist, und

wobei der Pufferleitblechabschnitt der feststehenden Schützbaugruppe für einen Starkstromkreis erlaubt, einzutreten, wenn die bewegliche Schützbaugruppe zu einer Stromkreisschließstellung betätigt wird, die einen Öffnungsabschnitt mit einer Breite aufweist, der an einem Endabschnitt davon groß ist, um der Isolierabdeckung zu erlauben, dort hindurchzugehen, und zur drehenden Welle hin enger wird, um dem feststehenden Hauptstromkreiskontakt zu erlauben, dort hindurchzugehen.

5. Vorrichtung nach irgendeinem der Ansprüche 1-4, wobei die Isolierabdeckung einen Ausschnitt umfasst, der derart gebildet ist, dass er schräg beschnitten ist, sodass er eine Breite aufweist, die zum Dauermagneten hin reduziert ist, um frei durch den Öffnungsabschnitt des Pufferleitblechabschnitts hindurchzugehen, wenn die bewegliche Schützbaugruppe zur Stromkreisschließstellung oder Stromkreisöffnungsstellung betätigt wird.

6. Vorrichtung nach irgendeinem der Ansprüche 1-5, wobei jeder Pufferleitblechabschnitt weiter einen Düsenabschnitt umfasst, der derart gebildet ist, dass er im rechten Winkel gebogen ist und sich von der Ecke des Öffnungsabschnitts des Pufferleitblechabschnitts erstreckt, um eine Einströmungsgeschwindigkeit oder eine Ausströmungsgeschwindigkeit des Isoliergases zu beschleunigen.

**7.** Vorrichtung nach irgendeinem der Ansprüche 1-6, wobei die drehende Welle in drei drehende Wellenabschnitte unterteilt ist, sodass sie getrennt oder zusammengefügt werden, um drei Phasen zu entsprechen.

**8.** Vorrichtung nach irgendeinem der Ansprüche 1-7, wobei jeder der drehenden Wellenabschnitte mehrere Aussparungs- und Vorsprungsabschnitte umfasst, die derart gebildet sind, dass sie vorstehen und an beiden Endabschnitten davon in einer Durchmesserrichtung konkav sind, um den beweglichen Schützbaugruppen von drei Phasen zu erlauben, leicht getrennt oder zusammengefügt zu werden.

**9.** Vorrichtung nach irgendeinem der Ansprüche 1-8, wobei jede der beweglichen Schützbaugruppen für jede Phase und jeder der drehenden Wellenabschnitte als eine einzelne Baugruppe konfiguriert ist.

**Revendications**

**1.** Appareil d'extinction d'arc pour une unité principale annulaire, comprenant:

un boîtier (10) dans lequel un gaz d'isolation est chargé;
une pluralité d'ensembles de contacteurs fixes (20a, 20b) pour un circuit d'énergie électrique, fixés de manière à être en saillie vers un centre dans le boîtier et formés en insérant un aimant permanent (20a2) pour une extinction d'arc grâce à une force magnétique entre une paire de contacts fixes de circuit principal (20a1);
un arbre de rotation (80), lequel est commun à trois phases, mis en place de manière à pouvoir tourner au centre du boîtier; et
un ensemble de contacteur mobile rotatif (90) formé de manière à s'étendre à partir de l'arbre rotatif,
**caractérisé par** une pluralité de contacteurs fixes de mise à la terre (30a, 30b) fixés de manière à être en saillie vers le centre dans le boîtier et mis en place de manière à être espacés par rapport aux ensembles de contacteurs fixes selon un angle prédéterminé; ledit ensemble de contacteur mobile rotatif ayant une pluralité de sections de plaques de guidage de soufflage (90b, 90c) ayant des parties d'ouverture (90b1, 90b2, 90c1) avec une largeur d'ouverture étroite afin d'accéler la vitesse d'écoulement d'un gaz d'isolation afin d'éteindre l'arc en le soufflant, et pouvant tourner dans une position de fermeture de circuit dans laquelle l'ensemble de contacteur mobile rotatif est en contact avec les contacts fixes de circuit principal de l'ensemble de contacteur fixe, une position de mise à la terre dans laquelle l'ensemble de contacteur mobile rotatif est en contact avec le contacteur fixe de mise à la terre, et une position d'ouverture de circuit dans laquelle l'ensemble de contacteur mobile rotatif est séparé du contact fixe de circuit principal et est séparé du contacteur fixe de mise à la terre, en fonction d'une rotation de l'arbre de rotation.

**2.** Appareil selon la revendication 1, dans lequel l'ensemble de contacteur mobile comprend un contacteur mobile (90a), fourni de manière à s'étendre dans un sens du diamètre à partir de l'arbre de rotation, ayant une pluralité de contacts mobiles (90a-1) mis en place de manière à être en contact avec les contacts fixes de circuit principal ou avec les contacteurs fixes de mise à la terre intercalés et espacés les uns des autres de manière à se faire face et fournis de manière à correspondre aux trois phases.

**3.** Appareil selon la revendication 1 ou la revendication 2, dans lequel l'ensemble de contacteur mobile comprend en outre une paire de parties de cloison de séparation isolantes (90e) se faisant face l'une l'autre, chacune étant fournie pour chaque phase et espacées d'une première distance prédéterminée afin d'isoler électriquement le contacteur mobile tout en permettant aux ensembles de contacteurs fixes ou aux contacteur fixes de mise à la terre de passer à travers elles, et
la section de plaque de guidage de soufflage permettant à l'ensemble de contacteur fixe d'entrer lorsque l'ensemble de contacteur mobile passe à une position de fermeture de circuit, ayant une partie d'ouverture (90c1) avec une largeur plus étroite que la première distance des parties de cloisons de séparation isolantes afin d'accélérer la vitesse d'écoulement du gaz d'isolation.

**4.** Appareil selon l'une quelconque des revendications 1-3, dans lequel chacun des ensembles de contacteurs fixes comprend un couvercle isolant ayant une largeur plus importante que celle du contact fixe de circuit principal et formé par un matériau d'isolation électrique, et la section de plaque de guidage de soufflage permettant à l'ensemble de contacteur fixe pour un circuit de puissance d'entrer lorsque l'ensemble de contacteur mobile passe à une position de fermeture de circuit, ayant une partie d'ouverture ayant une largeur qui est importante à une partie d'extrémité de celle-ci afin de permettre au couvercle isolant de passer à travers et qui devient plus étroite vers l'arbre de rotation afin de permettre au contact fixe de circuit principal de passer à travers.

**5.** Appareil selon l'une quelconque des revendications 1-4, dans lequel le couvercle isolant comprend une partie coupée, formée de manière à être rognée en biais afin d'avoir une largeur réduite vers l'aimant permanent, de manière à librement passer à travers la partie d'ouverture de la section de plaque de guidage de soufflage lorsque l'ensemble de contacteur mobile passe à la position de fermeture de circuit ou à la position d'ouverture de circuit.

6.  Appareil selon l'une quelconque des revendications 1-5, dans lequel chaque section de plaque de guidage de soufflage comprend en outre une section de buse, formée de manière à être pliée en angle droit et à s'étendre à partir de l'angle de la partie d'ouverture de la section de plaque de guidage de soufflage, afin d'accélérer une vitesse de flux entrant ou de flux sortant du gaz d'isolation.

7.  Appareil selon l'une quelconque des revendications 1-6, dans lequel l'arbre de rotation est divisé en trois sections d'arbre de rotation de manière à être séparé ou assemblé afin de correspondre à trois phases.

8.  Appareil selon l'une quelconque des revendications 1-7, dans lequel chacune des sections d'arbre de rotation comprend une pluralité de parties creuses et protubérantes formées de manière à être en saillie et concaves aux deux parties d'extrémité de celles-ci dans un sens du diamètre, afin de permettre aux ensembles de contacteurs mobiles de trois phases d'être facilement séparés ou assemblés.

9.  Appareil selon l'une quelconque des revendications 1-8, dans lequel chacun des ensembles de contacteurs mobiles pour chaque phase et chacune des sections d'arbre de rotation sont configurés en tant qu'un ensemble unique.

# FIG. 1

# FIG. 2

# FIG. 3

# FIG. 4

# FIG. 5

# FIG. 6

# FIG. 7

# FIG. 8

# FIG. 9

# FIG. 10

# FIG. 11

# FIG. 12

# FIG. 13

# FIG. 14

# FIG. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4803319 A